# FASCICULE DE BREVET EUROPEEN

(11) **EP 0 810 946 B1**
(45) Date de publication et mention de la délivrance du brevet: **18.11.1998**
(21) Numéro de dépôt: 96904890.9
(22) Date de dépôt: 21.02.1996
(51) Int. Cl.: B64G 1/42, G01F 23/14

(54) **DISPOSITIF DE PRESSURISATION D'UN SOUS-SYSTEME DE PROPULSION BILIQUIDE UNIFIE D'UN SATELLITE GEOSTATIONNAIRE**
DRUCKERHÖHUNGSEINRICHTUNG FÜR EIN TEILSYSTEM EINER INTEGRIERTEN 2-FLÜSSIGKEITS-ANTRIEBSEINHEIT FÜR EINEN GEOSTATIONÄREN SATELLITEN
DEVICE FOR PRESSURISING A UNIFIED TWO-LIQUID PROPULSION SUBSYSTEM FOR GEOSTATIONARY SATELLITES

(30) Priorité: 22.02.1995 FR 9502042
(43) Date de publication de la demande: 10.12.1997
(73) Titulaire: CENTRE NATIONAL D'ETUDES SPATIALES, F-75039 Paris Cedex 01 (FR)
(72) Inventeur: DELEPIERRE-MASSUE, Olivier, F-78370 Plaisir (FR); FEVRIER, Claude, F-78200 Magnanville (FR); SALOME, Roland, F-31670 Labège (FR); LE TORRIVELLEC, Pierre, F-31520 Ramonville-Saint-Agne (FR)
(74) Mandataire: Dubois-Chabert, Guy
(86) Numéro de dépôt international: FR9600278
(87) Numéro de publication internationale: WO9626108

(56) Documents cités:
- DE-U- 8 806 777
- FR-A- 2 629 913
- US-A- 4 987 775
- JOURNAL OF PROPULSION AND POWER, vol. 8, no. 1, Janvier 1992, NEW YORK, USA, pages 74-79, XP000244086 TSO PING YEH: "Bipropellant Propulsion Performance and Propellant-Remaining Prediction for INSAT-1B"
- JOURNAL OF SPACECRAFT AND ROCKETS, vol. 30, no. 1, Janvier 1993, NEW YORK, USA, pages 92-101, XP000390641 M. V. CHOBOTOV ET AL.: "Low-Gravity Propellant Gauging System for Accurate Predictions of Spacecraft End-of-Life" cité dans la demande

## Description

### Domaine technique

La présente invention concerne un dispositif de pressurisation d'un sous-système de propulsion biliquide unifié d'un satellite géostationnaire.

### Etat de la technique antérieure

Les satellites de télécommunication sont placés sur une orbite dans le plan de l'équateur terrestre à 36 000 km environ de la terre. Cette orbite circulaire possède la particularité que tout objet satellisé sur cette orbite a une période de rotation de vingt quatre heures autour de la terre. Ainsi un objet satellisé paraît immobile au-dessus de la terre pour un observateur terrestre. Cette orbite privilégiée permet aux satellites de télécommunication de remplir au mieux leur fonction de relais de communication entre plusieurs points situés sur la terre.

Pour injecter un satellite sur son orbite définitive puis assurer son maintien à poste pendant sa durée de vie utile, des moyens de propulsion doivent être prévus. Les sous-systèmes unifiés sont maintenant utilisés de manière générale. Une tendance qui se manifeste actuellement consiste à prévoir un sous-système de propulsion unifié, qui tout à la fois intervient pour injecter le satellite sur son orbite définitive depuis l'orbite initiale ou orbite de transfert et pour assurer ensuite le maintien à poste du satellite.

Dans un tel sous-système de propulsion biliquide unifié le moteur biliquide est alimenté à partir des mêmes réservoirs et circuits primaires que les autres propulseurs nécessaires au contrôle d'attitude et d'orbite. Ceci implique que la phase de transfert doit se réaliser avec le sous-système de propulsion sous pression régulée d'hélium (18 bars environ) stocké dans des réservoirs haute-pression et, qu'une fois la mise à poste effectuée, le moteur d'apogée et la source d'hélium sont isolés du reste du sous-système qui travaille dès lors à pression décroissante au fur et à mesure de la consommation des ergols dans les réservoirs principaux. En règle générale, on utilise deux ergols, par exemple la monométhylhydrazine (MMH) comme combustible et le peroxyde d'azote (N₂O₄) comme oxydant.

A ce jour la plupart des satellites de télécommunications géostationnaires utilisent un tel sous-système de propulsion biliquide unifié.

L'utilisateur à qui est allouée une position précise sur l'orbite géostationnaire, désire ne conserver sur cette portion que des satellites qui sont efficaces pour le système de trafic de communication qu'il exploite. Il opère donc régulièrement le remplacement de tout satellite devenu obsolescent par un nouveau satellite. Il y a alors lieu de renvoyer le satellite obsolescent sur une orbite où il ne risque pas de gêner le nouveau satellite, ni ceux environnants, lorsqu'on est sûr de son obsolescence, afin d'optimiser la rentabilité du système mis en place.

La cause la plus fréquente qui provoque la fin de vie du satellite est la consommation de la totalité des ergols permettant le maintien à poste du satellite et son pointage vers la terre.

Au cours de la durée de vie du satellite, une partie importante de la masse d'ergols embarqués est tout d'abord brûlée dans le moteur d'apogée dont le but est d'augmenter le vecteur vitesse du satellite pour le faire passer d'une orbite elliptique allongée dite "de transfert" à l'orbite circulaire à 36 000 km d'altitude.

Une fois mis à poste sur sa position orbitale, le satellite est soumis à des forces perturbatrices (attraction luni-solaire, pression de radiation solaire, etc..) qui ont tendance à lui faire décrire des mouvements cycliques d'amplitude croissante autour de la position initiale. Les stations au sol étant pointées vers un point fixe dans le ciel, afin d'éviter le suréquipement des stations au sol avec des dispositifs suiveurs du satellite, et pour maintenir le satellite sur la position orbitale allouée, il faut périodiquement intervenir pour s'opposer aux mouvements perturbateurs du satellite, en brûlant périodiquement une quantité d'ergols dans les moteurs de contrôle d'orbite. Le satellite est également soumis autour de son centre de gravité à des couples perturbateurs qui conduiraient à le dépointer. Une quantité d'ergols est donc aussi périodiquement brûlée dans les moteurs de contrôle d'attitude.

L'utilisateur demande de connaître la date d'obsolescence du satellite suffisamment en avance pour pouvoir lancer les activités nécessaires à son remplacement. L'opérateur du satellite doit donc pouvoir prévoir avec sûreté la fin de la consommation des ergols, de façon à déclencher l'opération d'éjection de l'orbite. Si le système de connaissance n'est pas précis, on perd d'autant plus de temps d'utilisation et de commercialisation du satellite que ce moyen est imprécis.

Différents dispositifs de l'art connu ont pour objet de résoudre ces problèmes.

Un article intitule "Low-Gravity Propellant Gauging System for Accurate Predictions of Spacecraft End-of-Life" de M.V. Chobotov et G.P. Purohit (Journal of Spacecraft and Rockets; volume 30; numéro 1; janvier/février 1993) décrit un système pour évaluer l'ergol dans un environnement de faible gravité, et prédire la fin de vie d'un satellite à mieux de plus ou moins deux mois, à moitié de vie pour une mission nominale de quinze ans de satellites géosynchrones. Le système comprend deux capteurs de pression (un pour chaque réservoir) et une valve de verrouillage d'interconnexion entre les deux réservoirs, qui représentent respectivement les réservoirs d'ergols et de gaz sous pression (hélium) existant dans le système de propulsion du satellite. Pour effectuer une mesure d'ergols, le réservoir d'ergols est repressurisé par une ouverture brève de la valve d'interconnexion entre le réservoir sous pression à relativement plus haute pression et le réservoir d'ergols. La vanne d'interconnexion est refermée avant l'égalisation de pression entre les deux réservoirs pour permettre la réalisation de mesures multiples au cours de la mission du satellite. Les mesures des pressions et des températures des réservoirs avant et après repressurisation permettent de déterminer le volume de gaz résiduel dans le réservoir d'ergols par calcul selon la loi des gaz. De la connaissance de ce volume et de celle du volume total des réservoirs d'ergols on déduit le volume de liquide présent et, par là, la masse d'ergols disponibles.

Une demande de brevet allemand DE-8 806 777 décrit un appareil de mesure en apesanteur de la quantité de liquide, notamment de la quantité d'ergols, contenue dans les réservoirs des satellites, dans lequel un réservoir d'ergols est relié à un réservoir de gaz comprimé par l'intermédiaire d'une conduite d'alimentation en gaz sous pression, dans laquelle est installé un dispositif de mesure donnant la quantité de gaz transféré lors de la mise en oeuvre du dispositif. Une vanne d'isolation (ou d'interconnexion) permet de maintenir une pression dans le réservoir contenant le gaz comprimé supérieure à celle du réservoir d'ergols. Un capteur de pression permet de déterminer également la pression du gaz contenu dans le réservoir d'ergols.

Une demande de brevet français N° 91 15441 du 12 décembre 1991 décrit un dispositif de mesure périodique du volume résiduel de liquide dans un réservoir fermé sous pression contenant un liquide, qui est progressivement soutiré, et un gaz faiblement soluble dans celui-ci, qui comprend une source de gaz sous pression, un régulateur-détendeur alimentant le réservoir et constitué de façon à empêcher en permanence la pression dans le réservoir de descendre au-dessous d'une valeur P prédéterminée, des moyens permettant d'admettre du gaz sous une pression P + ΔP dans le réservoir à travers un étranglement et des moyens de mesure de la durée de passage de la pression interne de P à P + ΔP.

Une demande de brevet français N° 2 629 913 décrit un procédé pour évaluer la quantité résiduelle de carburant dans le réservoir d'un spationef placé sur orbite, selon lequel on détermine le volume de gaz se trouvant dans le réservoir de carburant à un moment donné et on soustrait cette quantité du volume total dudit réservoir. On effectue une première mesure de pression P1, P2 à la sortie du réservoir de pressurisation et l'entrée du réservoir de carburant et une première mesure de température T à un moment prédéterminé au cours de la mission spatiale, puis on effectue une seconde mesure de pression P' et une seconde mesure de température T' après avoir mis en communication directe la sortie du réservoir de gaz de pressurisation et l'entrée du réservoir de carburant, les mesures de pression P1, P2, P' et de température T, T' servant à déterminer le volume gaz dans le réservoir de carburant. Le système permettant de mettre en oeuvre ce procédé comprend
- une conduite reliant directement la sortie du réservoir de gaz de pressurisation et l'entrée du réservoir de carburant, cette conduite contenant un venturi;
- une première vanne répondant à un signal de commande pour laisser s'introduire le gaz de pressurisation dans la conduite au début de la mission spatiale ;
- une deuxième vanne répondant à un signal de commande pour fermer la communication entre la conduite et le réservoir de carburant à un moment prédéterminé au cours de la mission spatiale;
- un premier transducteur de pression connecté pour mesurer la pression P1, ΔP1 en amont de la première vanne ; et
- un deuxième transducteur de pression pour mesurer la pression P2, ΔP2 en aval de la deuxième vanne.

Dans les dispositifs de l'art connu la régulation de pression pendant la phase de transfert est toujours réalisée par l'intermédiaire d'un détendeur-régulateur de pression mécanique (parfois redondé en série).

Par contre, la mesure des ergols résiduels pendant la phase de vie orbitale se fait grâce à des dispositifs de vannes indépendants montés en parallèle à la ligne principale de pressurisation régulée. La pressurisation du sous-système de propulsion biliquide du satellite et la mesure de la quantité des ergols résiduels ont lieu pendant cette phase de vie orbitale par une méthode de repressurisation (ou "regonflage").

L'objet de l'invention n'est pas dans la méthode de mesure utilisée, qui est celle décrite dans la demande de brevet français FR-A-2 629 913 (Gindre) et dans l'article intitulé "Low-Gravity Propellant Gauging System for Accurate Predictions of Spacecraft End-of-Life", analysés précédemment.

L'objet de l'invention est d'assurer, par un seul et même sous-ensemble (redondant) de vannes et d'orifices calibrés, les deux fonctions de pressurisation régulée pendant la phase de transfert et de mise à poste du satellite, et de "regonflage" pendant la phase de vie orbitale.

### Exposé de l'invention

La présente invention propose un dispositif de pressurisation d'un sous-système de propulsion biliquide unifié d'un satellite géostationnaire, comprenant :
- un ensemble de stockage d'hélium haute pression comportant au moins un réservoir d'hélium ;
- un ensemble de régulation ;
- un ensemble de pressurisation de réservoirs d'ergols, reliés entre eux par un circuit de pressurisation;
   caractérisé en ce que l'ensemble de régulation est un ensemble de régulation électronique comprenant plusieurs électrovannes, disposées en différents endroits du circuit de pressurisation, ces électrovannes étant commandées par un circuit de traitement et de commande qui reçoit des informations issues de capteurs de pression associés aux différents réservoirs, ce circuit de commande permettant une pressurisation à pression constante des réservoirs d'ergols pendant la phase de transfert et de mise à poste du satellite, et une mesure de la quantité d'ergols résiduels pendant la phase de vie orbitale du satellite.

Avantageusement les réservoirs de stockage d'hélium communiquent avec le réservoir de combustible et le réservoir d'oxydant par plusieurs conduites. Dans une première conduite est insérée une première vanne pyrotechnique, un premier filtre, une seconde et une troisième vannes pyrotechniques en parallèle, chacune étant disposée en série avec un élément fuite calibrée. Dans une deuxième et une troisième conduites sont insérés un clapet anti-retour, une quatrième ou sixième vanne pyrotechnique et une cinquième ou septième vanne pyrotechnique séparées par un second ou troisième filtre.

Le circuit de stockage d'hélium est complété par une vanne de remplissage et de vidange au sol, par une prise de test et par un système de pression.

L'ensemble de pressurisation est complété par des prises de test et par des capteurs de pression.

Dans un exemple de réalisation les électrovannes sont disposées respectivement entre la deuxième (et la troisième) vanne pyrotechnique et l'élément fuite calibrée correspondant entre le second filtre et la cinquième vanne pyrotechnique et entre le troisième filtre et la septième vanne pyrotechnique Le circuit de traitement et de commande reçoit des informations issues de capteurs de pression associés aux réservoirs d'hélium et de capteurs de pression associés aux réservoirs d'ergols.

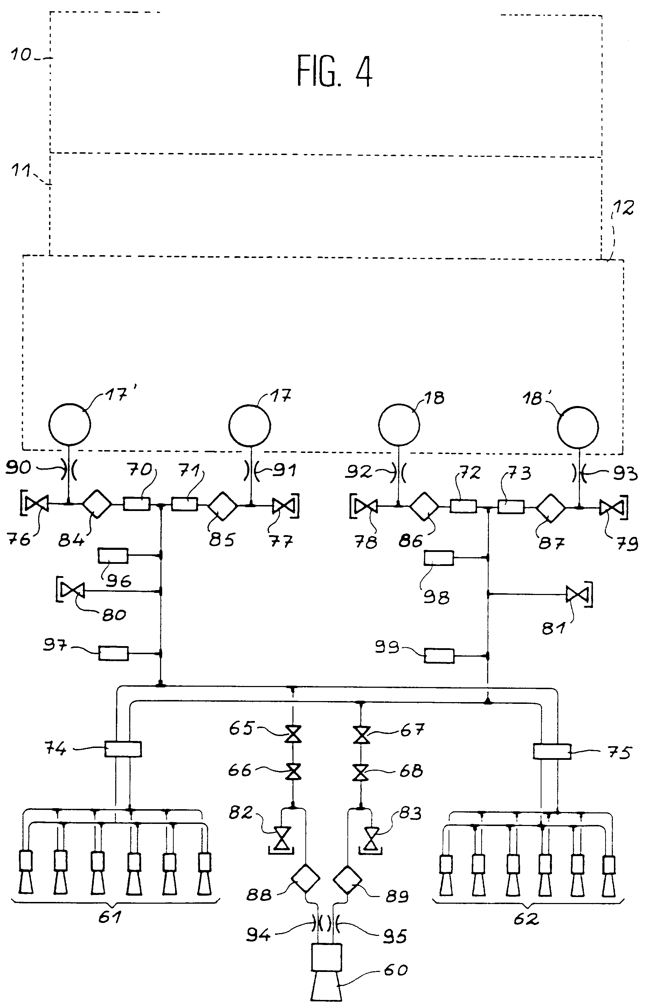

Dans un autre exemple de réalisation le dispositif de l'invention comporte au moins deux réservoirs de combustible et au moins deux réservoirs d'oxydant, les éléments des deuxième et troisième conduites associés aux premiers réservoirs étant alors dupliqués; les vannes pyrotechniques et éléments de branches, illustrés sur la figure 4 avec des " ' " étant ainsi relatifs à une configuration du sous-système propulsif comportant plus de deux réservoirs d'ergols.

Le dispositif de l'invention, dans sa fonction de pressurisation constante, est assimilable à un régulateur de type électronique. Il présente notamment l'avantage de permettre un ajustement ou une modification en vol des seuls de pression régulée, ce qui est impossible avec un régulateur mécanique.

Pendant la phase de vie orbitale, les électrovannes assurent l'isolation de la partie hélium haute pression des réservoirs d'ergols avec un taux d'étanchéité requis. La mesure des ergols résiduels dans chaque réservoir peut s'effectuer à intervalles réguliers pendant la vie orbitale. Elle consiste, par une ouverture/fermeture d'électrovannes, à réintroduire de l'hélium dans les réservoirs d'ergols. La connaissance des variations de pressions fournies par les capteurs permet alors de connaître le volume libre et donc celui de liquide présent dans les réservoirs d'ergols.

### Brève description des dessins

- La figure 1 illustre schématiquement le dispositif de l'invention;
- les figures 2 et 3 représentent des courbes illustrant l'évolution de pression dans les réservoirs d'ergols en fonction du temps;
- la figure 4 est relative à la partie liquide du sous-système propulsif située en aval du dispositif objet de l'invention, lui-même situé dans la partie gazeuse de pressurisation.

### Exposé détaillé de modes de réalisation

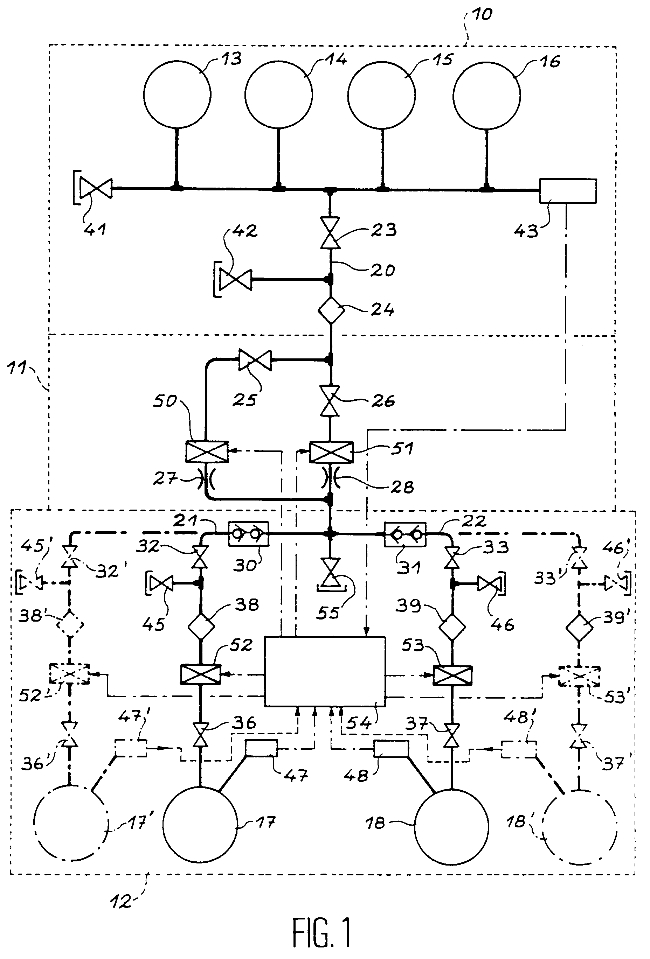

Comme représenté sur la figure 1 en traits pleins, le dispositif de l'invention comprend :
- un ensemble 10 de stockage d'hélium haute pression comprenant notamment des réservoirs de stockage d'hélium 13, 14, 15 et 16 ;
- un ensemble 11 de régulation électronique ;
- un ensemble 12 de pressurisation comprenant notamment deux réservoirs d'ergols à savoir un réservoir de combustible 17 et un réservoir d'oxydant 18.

Les réservoirs de stockage d'hélium 13, 14, 15 et 16 (ici quatre en parallèle) communiquent avec le réservoir de combustible 17 et le réservoir d'oxydant 18 par des conduites 20, 21 et 22.

Dans la première conduite 20 est insérée une première vanne pyrotechnique 23, un premier filtre 24, une seconde et une troisième vannes pyrotechniques 25 et 26 en parallèle, chacune étant disposée en série avec un élément de fuite calibrée 27 et 28.

Dans chacune des deuxième et troisième conduites 21 et 22 sont insérés un clapet anti-retour 30 et 31, une quatrième vanne pyrotechnique et une cinquième vanne pyrotechnique 32 et 36 séparées par un second filtre 38 (ou une sixième et une septième vannes 33 et 37 pyrotechniques séparées par un troisième filtre 39).

Le circuit de stockage d'hélium 10 est complété par une vanne de remplissage et de vidange au sol 41, par une prise de test 42, et par un capteur de pression 43.

L'ensemble de pressurisation 12 est complété par des prises de test 45, 46 et 55 et par des capteurs de pression 47 et 48.

Selon l'invention on introduit plusieurs électrovannes 50, 51, 52 et 53 commandées par un circuit de traitement et de commande 54, en différents endroits de ce circuit; respectivement entre la deuxième 25 (et la troisième 26) vanne pyrotechnique et l'élément fuite calibrée correspondant 27 ou 28, entre le second filtre 38 et la cinquième vanne pyrotechnique 36 et entre le troisième filtre 39 et la septième vanne pyrotechnique 37. Le circuit de traitement et de commande 54 reçoit des informations issues de capteurs de pression 43 associés aux réservoirs d'hélium 13, 14, 15 et 16 et de capteurs de pression 47 et 48 associés aux réservoirs d'ergols 17 et 18.

Il faut toutefois préciser que l'invention marche aussi avec un nombre plus limité de vannes (la vanne 50 est ici pour assurer la redondance uniquement et n'est pas essentielle au fonctionnement du dispositif). De plus les électrovannes 52 et 53 peuvent fonctionner indépendamment et permettre ainsi une mesure individuelle et indépendante des quantités de liquide présentes dans les réservoirs.

La vanne de remplissage 41 permet de remplir les réservoirs d'hélium 13, 14, 15 et 16 au sol, à 300 bars, la première vanne pyrotechnique 23 étant normalement fermée, le reste du circuit restant à faible pression. Cette vanne est ouverte après la séparation du satellite d'avec le lanceur.

Les clapets anti-retour 30 et 31 permettent d'éviter un mélange des deux ergols qui serait explosif.

Les filtres 24, 38 et 39 situés en sortie des vannes pyrotechniques permettent de protéger les circuits en aval.

La cinquième et la septième vannes pyrotechniques 36 et 37 restent normalement ouvertes jusqu'à la fin de vie du satellite. Elles ne sont utilisées qu'en cas de fuite et de risque d'explosion, leur mise à feu permettant d'isoler les réservoirs d'ergols 17, 18 par rapport aux réservoirs d'hélium 13, 14, 15 et 16.

On peut noter que les vannes pyrotechniques, leur nombre et emplacement sont avant tout dictés par des considérations de sécurité et de respect des exigences de sauvegarde au sol des autorités de champ de tir.

Le dispositif de l'invention a pour objet de réaliser à la fois :
- une fonction de pressurisation à pression constante des réservoirs d'ergols pendant la phase de transfert et de mise à poste du satellite ;
- une fonction de repressurisation ou de "regonflage" des réservoirs d'ergols permettant une mesure de la quantité d'ergols résiduels durant la phase de vie orbitale.

Le circuit de traitement et de commande 54 envoie des ordres d'ouverture/fermeture aux électrovannes disposées dans le circuit de pressurisation des réservoirs d'ergols. Ainsi, pendant la phase de transfert et de mise à poste du satellite, après mise en configuration du sous-système, la pressurisation et le maintien de celle-ci s'effectuent par l'intermédiaire des électrovannes dont les ordres d'ouverture/fermeture sont élaborés par le circuit de traitement et de commande sur comparaison de données fournies par les capteurs de pression avec des seuls préréglés de régulation désirée, ces seuls pouvant, éventuellement, être modifiés à distance.

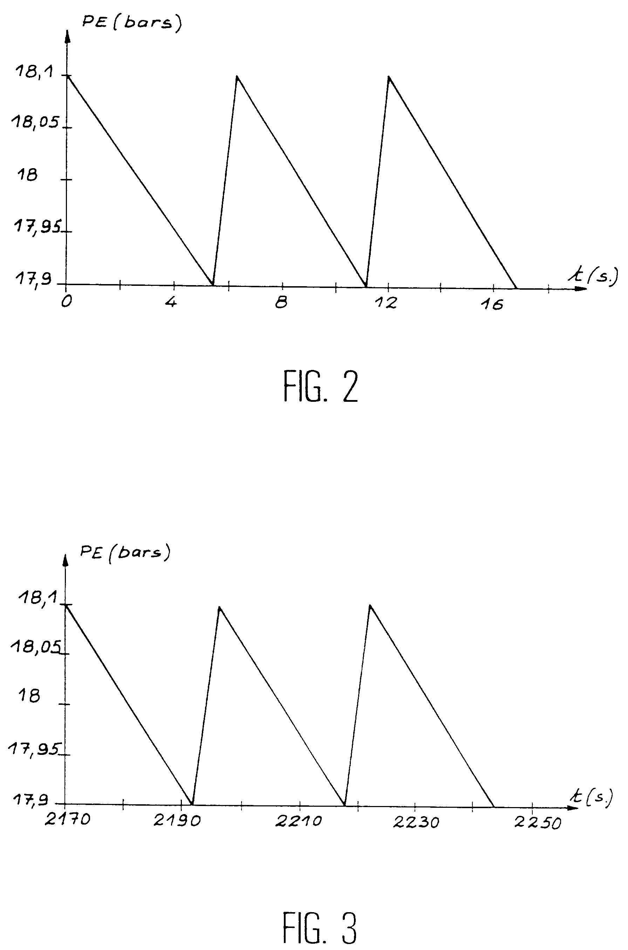

Les courbes donnant la pression d'ergols PE en fonction du temps t, représentées aux figures 2 et 3, illustrent l'évolution de la fréquence de pilotage de l'électrovanne de régulation 51 en fonction du temps au cours de la phase de transfert et des manoeuvres d'apogée le volume de gaz dans les réservoirs d'ergols étant 100 litres dans le cas de la figure 2 et 400 litres dans le cas de la figure 3 ; cet exemple de fonctionnement étant considéré pour des seuils de régulation fixés à 17.9 et 18.1 respectivement.

Le dispositif de l'invention comprend donc deux phases de fonctionnement :

### 1/ Pendant la séquence de transfert et mise à poste

Après mise en configuration du sous-système, c'est-à-dire après ouverture des vannes d'isolation pyrotechniques normalement fermées (23, 26, 32, 33), la pressurisation et son maintien pendant toute la phase de transfert s'effectuent par l'intermédiaire des électrovannes dont les ordres d'ouverture/fermeture sont élaborés par l'électronique de traitement et de commande sur comparaison des données fournies par les capteurs de pression avec les seuils préréglés de régulation désirée.

Une défaillance de la voie nominale entraîne la fermeture de la vanne pyrotechnique (29) et l'ouverture (non forcément simultanée) de la voie redondante (25).

### 2/ En orbite

Les électrovannes assurent l'isolation de la partie hélium haute pression (dans laquelle il ne reste que 60 bars environ après la mise à poste) des réservoirs d'ergols avec le taux d'étanchéité requis. La mesure des ergols résiduels dans chaque réservoir peut s'effectuer à intervalles réguliers pendant la vie orbitale. Elle consiste par ouverture/fermeture des électrovannes à réintroduire de l'hélium dans les réservoirs d'ergols. La connaissance des variations de pressions fournies par les capteurs permet alors de connaître le volume libre et donc celui de liquide présent dans les réservoirs d'ergols.

La défaillance ou un défaut d'étanchéité des vannes, constatés à partir des capteurs de pression, entraîne la fermeture des vannes pyrotechniques qui isole alors totalement le circuit hélium et on est ramené à la configuration qui existe aujourd'hui sur tous les sous-systèmes qui évoluent en mode dit de "blow-down" (pression décroissante) durant la vie orbitale.

Sur la figure 1, complétée avec les parties en traits mixtes, est représentée une variante de réalisation du dispositif de l'invention avec cette fois-ci plusieurs réservoirs de combustible, par exemple deux, et plusieurs réservoirs d'oxydant, par exemple deux.

Les éléments identiques à ceux de la figure 1 décrits précédemment gardent la même référence. Les nouveaux éléments jouant un rôle équivalent prennent la référence de l'élément correspondant avec " ' ".

Sur la figure 4 on retrouve les trois ensembles 10, 11 et 12 représentés sur la figure 1. Mais le moteur d'apogée liquide 60, le premier groupe de propulseurs 61 et le second groupe de propulseurs redondant 62 sont également représentés.

Sur cette figure sont représentés les différents éléments nécessaires à l'alimentation de ces moteurs et de ces propulseurs, à savoir :
- des vannes pyrotechniques 65, 66, 67 et 68;
- des vannes d'isolation 70, 71, 72, 73, 74 et 75;
- des vannes de remplissage 76, 77, 78 et 79;
- des prises de test 80, 81, 82, 83;
- des filtres 84, 85, 86, 87, 88 et 89;
- des éléments de fuite calibrée 90, 91, 92, 93, 94 et 95 ;
- des capteurs de pression 96, 97, 98 et 99.

Dans un exemple de fonctionnement de la variante du dispositif de l'invention illustrée aux figures 1 (prise dans sa totalité) et 4, on a les étapes suivantes :

### 1/ Etat initial

La pression d'hélium en amont de la première vanne pyrotechnique 23 normalement fermée est égale à 300 bars.

Le circuit en aval de cette vanne et jusqu'aux vannes d'isolation 70, 71, 72 et 73 qui sont en position fermée est sous pression de 4 bars environ d'hélium. Les réservoirs sont remplis d'ergols à 98 % de leur capacité (pour des raisons de sécurité au sol en cas d'élévation de température).

Le reste du circuit est également pressurisé sous 4 bars d'hélium. Les vannes d'isolation 74 et 75 qui permettent de sélectionner en vol la branche fonctionnelle ou sa redondante sont fermées.

### 2/ Séquence de mise en configuration

Après séparation du lanceur on a les opérations suivantes :
- purge des lignes ou conduitres ("venting")
   - ouverture des vannes pyrotechniques 36 et 37,
   - ouverture des vannes d'isolation 74 et 75,
   - ouverture des vannes du moteur d'apogée 60 et d'un ou deux propulseurs d'attitude pendant environ 30 secondes.

Le bon déroulement de ces opérations est suivi par la mise sous pression des lignes et statuts des équipements ;
- remplissage des lignes en ergols ("priming")
   - ouverture des vannes d'isolation 72 et 73 (un seul réservoir de chaque ergol),
      la pression des lignes doit s'établir à 4 bars environ (pression initiale réservoirs) ;
- pressurisation du sous-système
   - ouverture des vannes d'isolation 70 et 71,
   - ouverture des vannes pyrotechniques 32, 32', 33 et 33' (ces vannes servent à isoler les ergols l'un de l'autre jusqu'à cet instant. Ensuite ce sont les électrovannes 52, 52', 53 et 53' et les clapets anti-retour 30 et 31 qui assureront cette fonction).
   - ouverture des vannes 52, 52', 53 et 53',
   - ouverture de la vanne pyrotechnique 23.

A cet instant le dispositif de pressurisation est prêt à fonctionner.

Il y a montée à pression "régulée" par lancement de la séquence de mise à pression. La comparaison des données capteurs 47, 47', 48 et 48' avec le seuil de consigne affiché dans l'électronique de traitement et de commande 54 (typiquement 18 bars) pilote les ouvertures et fermetures de l'électrovanne 51 (qui est couplée à un orifice calibré).

En cas de défaillance, il y a passage sur la branche redondante (fermeture de la vanne pyrotechnique 26, ouverture de la vanne pyrotechnique 25 et régulation par l'électrovanne 50).

Le système est alors opérationnel et on peut dès lors utiliser les propulseurs.

### 3/ Phase de transfert en orbite géostationnaire

Cette phase nécessite, pour le fonctionnement du moteur d'apogée liquide 60 lors des manoeuvres d'apogée, que la pression soit régulée dans les réservoirs. Lorsqu'il y a débit, cette régulation est assurée par l'électrovanne 51 (ou l'électrovanne 50) sur ordres élaborés par l'électronique de traitement et de commande 54.

Entre chaque manoeuvre d'apogée les électrovannes 52, 52', 53 et 53' sont refermées (mais ceci n'est pas strictement nécessaire).

### 4/ Phase de vol

A l'issue de la phase de transfert, sur les satellites actuels, on ferme les vannes pyrotechniques 36, 36', 37 et 37' pour isoler définitivement l'hélium. A partir de à, la pression va décroître dans les réservoirs au fur et à mesure de la consommation des ergols.

Avec le dispositif de l'invention, ces vannes ne sont utilisées qu'en cas de défaillance et ramènent à la configuration ci-dessus.

Par ouverture programmée de l'électrovanne 51 et de l'électrovanne 52' par exemple, il est possible de réintroduire, à intervalles réguliers pendant la vie orbitale, de l'hélium dans le réservoir 17'. La mesure des variations de pression par les capteurs 43 et 47' permet alors de connaître la quantité de liquide présente dans ce réservoir.

On agit symétriquement pour les autres réservoirs.

La même procédure peut s'appliquer à un sous-système à deux réservoirs tel que représenté en traits pleins sur la figure 1.

## Revendications

1. Dispositif de pressurisation d'un sous-système de propulsion biliquide unifié d'un satellite géostationnaire, comprenant :
- un ensemble (10) de stockage d'hélium haute pression comportant au moins un réservoir de stockage d'hélium;
- un ensemble (11) de régulation;
- un ensemble (12) de pressurisation de réservoirs d'ergols (17, 18), reliés entre eux par un circuit de pressurisation ;
caractérisé en ce que l'ensemble de régulation est un ensemble de régulation électronique comprenant au moins une électrovanne (51), disposée en un endroit du circuit de pressurisation, et commandée par un circuit de traitement et de commande (54) qui reçoit des informations issues de capteurs de pression (43, 47, 48) associés aux différents réservoirs, ce circuit de traitement et de commande permettant une pressurisation à pression constante des réservoirs d'ergols (17, 18) pendant la phase de transfert et de mise à poste du satellite, et une mesure de la quantité d'ergols résiduels pendant la phase de vie orbitale du satellite.

2. Dispositif selon la revendication 1, caractérisé en ce qu'il comporte au moins un réservoir de combustible (17) et un réservoir d'oxydant (18).

3. Dispositif selon la revendication 2, caractérisé en ce que les réservoirs de stockage d'hélium communiquent avec le réservoir de combustible (17) et le réservoir d'oxydant (18) par plusieurs conduites (20, 21 et 22), en ce que dans une première conduite (20) est insérée une première vanne pyrotechnique (23), un premier filtre (24), une seconde et une troisième vannes pyrotechniques (25, 26) en parallèle, chacune étant disposée en série avec un élément fuite calibrée (27 et 28), et en ce que dans chacune des deuxième et troisième conduites (21 et 22) sont insérés un clapet anti-retour (30 et 31), une quatrième ou sixième vanne pyrotechnique (32, 33) et une cinquième ou septième vanne pyrotechnique (36, 37) séparées par un second ou troisième filtre (38, 39).

4. Dispositif selon la revendication 1, caractérisé en ce que le circuit de stockage d'hélium (10) est complété par une vanne de remplissage et de vidange au sol (41), par une prise de test (42) et par un capteur de pression (43).

5. Dispositif selon la revendication 3, caractérisé en ce que l'ensemble de pressurisation (12) est complété par des prises de test (45, 46 et 55) et par des capteurs de pression (47 et 48).

6. Dispositif selon la revendication 3, caractérisé en ce qu'une première électrovanne (51) est disposée entre la troisième vanne pyrotechnique (26) et l'élément fuite calibrée correspondant (28), et en ce que deux secondes électrovannes (52, 53) sont disposées respectivement entre le second filtre (38) et la cinquième vanne pyrotechnique (36) et entre le troisième filtre (39) et la septième vanne pyrotechnique (37).

7. Dispositif selon la revendication 6, caractérisé en ce qu'il comprend une électrovanne de redondance (50) disposée entre la deuxième vanne pyrotechnique (25) et l'élément de fuite calibrée correspondant (27).

8. Dispositif selon la revendication 6, caractérisé en ce que les deux secondes électrovannes (52, 53) fonctionnent séparément et permettent ainsi une mesure individuelle et indépendante des quantités de liquide présentes dans les réservoirs.

9. Dispositif selon la revendication 3, caractérisé en ce qu'il comporte au moins deux réservoirs de combustible (17, 17') et au moins deux réservoirs d'oxydant (18, 18'), les éléments des deuxième et troisième conduites (21, 22) associés aux premiers réservoirs (17 et 18) étant alors dupliqués.

## Claims

1. Device for pressurizing a standardized two-liquid propulsion system of a geostationary satellite comprising a high pressure helium storage unit (10) having at least one helium storage tank, a regulating unit (11) and a pressurizing unit for propellant tanks (17, 18) interconnected by a pressurizing circuit, characterized in that the regulating unit is an electronic regulating unit comprising at least one electrovalve (51), positioned at a location of the pressurizing circuit and controlled by a processing and control circuit (54), which receives informations from pressure sensors (43, 47, 48) associated with the different tanks, said processing and control circuit permitting a constant pressure pressurization of the propellant: tanks (17, 18) during the satellite transfer and placing in position phase and a measurement of the residual proplellant quantity during the orbital life phase of the satellite.

2. Device according to claim 1, characterized in that it has at least one fuel tank (17) and an oxidizer tank (18).

3. Device according to claim 2, characterized in that the helium storage tanks communicate with the fuel tank (17) and the oxidizer tank (18) by several lines (20, 21 and 22), that in a first line (20) is inserted a first pyrotechnic valve (23), a first filter (24), a second and a third pyrotechnic valve (25, 26) in parallel, each being placed in series with a calibrated leak element (27, 28) and in that in each of the second and third lines (21 and 22) are inserted a check valve (30, 31), a fourth or sixth pyrotechnic valve (32, 33) and a fifth or seventh pyrotechnic valve separated by a second or third filter (38, 39).

4. Device according to claim 1, characterized in that the helium storage circuit (10) is completed a ground filling and draining valve (41), a test connector (42) and a pressure sensor (43).

5. Device according to claim 3, characterized in that the pressurization unit (12) is completed by test connectors (45, 46, 55) and pressure sensors (47, 48).

6. Device according to claim 3, characterized in that a first electrovalve (51) is placed between the third pyrotechnic valve (26) and the corresponding calibrated leak element (28) and that two second electrovalves (52, 53) are respectively placed between the second filter (38) and the fifth pyrotechnic valve (36) and between the third filter (39) and the seventh pyrotechnic valve (37).

7. Device according to claim 6, characterized in that it comprises a redundant electrovalve (50) placed between the second pyrotechnic valve (25) and the corresponding calibrated leak element (27).

8. Device according to claim 6, characterized in that two second electrovalves (52, 53) operate separately and thus permit an individual and independent measurement of liquid quantities present in the tanks.

9. Device according to claim 3, characterized in that it has at least two fuel tanks (17, 17') and at least two oxidizer tanks (18, 18'), the elements of the second and third lines (21, 22) associated with the first tanks (17, 18) then being duplicated.

## Patentansprüche

1. Druckerhöhungseinrichtung für ein Teilsystem einer integrierten 2-Flüssigkeits-Antriebseinheit für einen geostationären Satelliten, umfassend:
- ein Gruppe (10) zum Speichern von Hochdruck-Helium mit wenigstens einem Heliumspeichertank;
- eine Regelgruppe (11);
- eine Gruppe (12) zur Unterdrucksetzung von Ergol-Tanks (17, 18), miteinander verbunden durch eine Druckleitung;
**dadurch gekennzeichnet,**
daß die Regelgruppe eine elektronische Regelgruppe ist, die wenigstens ein Elektroventil (51) umfaßt, an einer Stelle der Druckleitung angeordnet und gesteuert durch eine Verarbeitungs- und Steuerschaltung (54), die Informationen empfängt, die von den den verschiedenen Tanks zugeordneten Drucksensoren (43, 47, 48) stammen, wobei diese Verarbeitungs- und Steuerschaltung eine Unterdrucksetzung der Ergol-Tanks (17, 18) mit konstantem Druck während der Transfer- und Einschußkorrekturphase des Satelliten und eine Messung der Ergol-Restmenge während der Orbitallebensphase des Satelliten ermöglicht.

2. Einrichtung nach Anspruch 1, dadurch gekennzeichnet, daß sie wenigstens einen Brennstofftank (17) und einen Oxidatortank (18) umfaßt.

3. Einrichtung nach Anspruch 2, dadurch gekennzeichnet, daß die Heliumspeichertanks mit dem Brennstofftank (17) und dem Oxidatortank (18) durch mehrere Leitungen (20, 21 und 22) verbunden sind, und dadurch, daß in eine erste Leitung (20) ein erstes pyrotechnisches Ventil (23), ein erster Filter (24), ein zweites und ein zu diesem zweiten paralleles drittes pyrotechnisches Ventil (25, 26), jedes in Reihe mit einem kalibrierten Durchlaßelement (27, 28), eingebaut sind, und dadurch, daß in die zweite und die dritte Leitung (21 und 22) jeweils ein Rückschlagventil (30 und 31), ein viertes oder sechstes pyrotechnisches Ventil (32, 33) und ein fünftes oder siebtes pyrotechnisches Ventil (36, 37), eingebaut sind, getrennt durch einen zweiten oder dritten Filter (38, 39).

4. Einrichtung nach Anspruch 1, dadurch gekennzeichnet, daß die Heliumspeichergruppe (10) vervollständigt wird durch ein Bodenfüll- und -entleerungsventil (41), einen Testanschluß (42) und einen Drucksensor (43).

5. Einrichtung nach Anspruch 3, dadurch gekennzeichnet, daß die Unterdrucksetzungsgruppe (12) durch Testanschlüsse (45, 46 und 55) und durch Drucksensoren (47 und 48) vervollständigt wird.

6. Einrichtung nach Anspruch 3, dadurch gekennzeichnet, daß ein erstes Elektroventil (51) zwischen dem dritten pyrotechnischen Ventil (26) und dem entsprechenden kalibrierten Durchlaßelement (28) angeordnet ist, und dadurch, daß zwei zweite Elektroventile jeweils zwischen dem zweiten Filter (38) und dem fünften pyrotechnischen Ventil (36) und dem dritten Filter (39) und dem siebten pyrotechnischen Ventil (37) angeordnet sind.

7. Einrichtung nach Anspruch 6, dadurch gekennzeichnet, daß sie ein Redundanz-Elektroventil (50) umfaßt, angeordnet zwischen dem zweiten pyrotechnischen Ventil (25) und dem entsprechenden kalibrierten Durchlaßelement (27).

8. Einrichtung nach Anspruch 6, dadurch gekennzeichnet, daß die zweiten Elektroventile (52, 53) getrennt funktionieren und daher eine individuelle und unabhängige Messung der in den Tanks vorhandenen Flüssigkeitsmengen ermöglichen.

9. Einrichtung nach Anspruch 3, dadurch gekennzeichnet, daß sie wenigstens zwei Brennstofftanks (17, 17') und wenigstens zwei Oxidatortanks (18, 18') umfaßt, wobei die den ersten Tanks (17, 18) zugeordneten Elemente der zweiten und dritten Leitung (21, 22) dann doppelt vorhanden sind.
